Europäisches Patentamt

European Patent Office

Office européen des brevets

(19)

(11) **EP 1 399 241 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(21) Anmeldenummer: **02753065.8**

(22) Anmeldetag: **04.06.2002**

(51) Int Cl.⁷: **B01D 46/42**, B01D 46/24, B01D 46/02

(86) Internationale Anmeldenummer:
**PCT/EP2002/006098**

(87) Internationale Veröffentlichungsnummer:
**WO 2002/102494 (27.12.2002 Gazette 2002/52)**

(54) **PARTIKELFILTER FÜR ABGASE VON BRENNKRAFTMASCHINEN**

PARTICLE FILTER FOR THE EXHAUST GAS OF INTERNAL COMBUSTION ENGINES

FILTRE A PARTICULES POUR GAZ D'ECHAPPEMENT DE MOTEURS A COMBUSTION INTERNE

(84) Benannte Vertragsstaaten:
**DE ES FR GB IT**

(30) Priorität: **18.06.2001 DE 10128937**
**18.06.2001 DE 10128936**
**25.05.2002 DE 10223452**

(43) Veröffentlichungstag der Anmeldung:
**24.03.2004 Patentblatt 2004/13**

(73) Patentinhaber: **HJS Fahrzeugtechnik GmbH & Co.**
**58706 Menden (DE)**

(72) Erfinder:
• **FRÄNKLE, Gerhard, Jürgen**
**73630 Remshalden (DE)**
• **SCHULTE, Hermann, Josef**
**58710 Menden (DE)**
• **FRISSE, Hans, Peter**
**52134 Herzogenrath (Niederbardenberg) (DE)**
• **JUTKA, Carsten**
**58710 Menden (DE)**
• **KOLL, Jochen**
**59755 Arnsberg (DE)**
• **KRAFT, Franz**
**58807 Balve (DE)**

(74) Vertreter: **Wittner, Walter et al**
**Wittner & Müller**
**Patentanwälte**
**Am Ochsenberg 16**
**73614 Schorndorf (DE)**

(56) Entgegenhaltungen:
**DE-C- 3 637 516**   **DE-C- 4 403 450**
**US-A- 4 154 587**   **US-A- 4 562 039**
**US-A- 4 924 561**

**Beschreibung**

Die Erfindung betrifft einen Abgasartikelfilter zum Reinigen der Abgase von Brennkraftmaschinen, insbesondere von dieselkraftstoffbetriebenen Brennkraftmaschinen, gemäß dem Oberbegriff des Anspruches 1.

Abgaspartikelfilter der vorgenannten Art sind aus der DE 198 10738 C1 bekannt und arbeiten mit Filtertaschen, die vom Abgas durchströmte Filterflächen aus Sintermetall aufweisen und mit einer zentralen Ausnehmung versehen und durch diese von Abgas angeströmt sind. Gestapelt zu einem Filterkörper sind aufeinander folgende Filtertaschen im Bereich ihrer der zentralen Ausnehmung zugewandten Taschenöffnung über ihre einander benachbarten Seitenwände verbunden, so dass sich eine über die Filterwände laufende Durchströmung von innen und außen ergibt. Die Filterwände sind mit wechselseitigen Abstandsprofilierungen versehen und über diese gegeneinander abgestützt. Prinzipbedingt sind Partikelfilter eines derartigen Aufbaus bezüglich ihrer räumlichen Konfiguration, insbesondere auch unter Fertigungsgesichtspunkten, weitgehend gebunden.

Ferner sind aus der DE 36 37 516 C1 Staubfilter für industrielle Zwecke bekannt. Diese sind nach Art von Schlauchfiltern gestaltet, deren schlauchförmige Filterkörper, von außen mit Rohgas angeströmt, rohgasseitig geschlossen sind und reingasseitig offene, endseitige Abströmöffnungen aufweisen. Im Bereich dieser Abströmöffnungen sind die schlauchförmigen Filterkörper an einer die Abgasseitige von der Rohgasseite abgrenzenden Trennwand befestigt. Die einzelnen Filterkörper sind aus im Querschnitt dreiecksförmigen Filtertaschen aufgebaut, die sich in Richtung ihrer Längserstreckung gegen die Rohgasseite sowie in radialer Richtung keilförmig verjüngen und in diesen Richtungen geschlossen sind. Die die reingasseitigen Abströmöffnungen bildenden Taschenöffnungen liegen im Bereich der Trennwand, an der die einzelnen Filterkörper befestigt sind. Zur Reinigung des stehend angeordneten Staubfilters ist eine Gegenstromspüleinrichtung vorgesehen, durch die der rohgasseitig an den Filterwänden der Filterkörper angelagerte Staub abgeblasen, im unteren Teil des Filtergehäuses gesammelt und über einen Staubaustrag abgezogen werden kann.

Der Erfindung liegt die Aufgabe zugrunde, einen Abgaspartikelfilter der eingangs genannten Art im Hinblick auf hohe Filterleistung bei kleinem Raumbedarf auszubilden, und zwar bei hoher Variabilität bezüglich der Konfiguration des Filterkörpers ungeachtet vorteilhafter Voraussetzungen für die Fertigung.

Erreicht wird dies mit einem Abgaspartikelfilter gemäß dem Anspruch 1, der für den Aufbau des Filterkörpers mit schlanken, spitzwinklig keilförmigen Filtertaschen arbeitet, wobei über die Bemessungsverhältnisse für diese Taschen ein günstiges Verhältnis des Raumbedarfes zur Filterfläche sichergestellt ist, und zwar in besonderer Berücksichtigung der für Abgaspartikelfilter von Brennkraftmaschinen gegebenen Anforderungen, so insbesondere auch bezüglich des Abbrennens der auf der Filterfläche abgelagerten Partikel, insbesondere Rußpartikel sowie der Speicherung von Motorölaschen, die nach dem Abbrennen des Rußes irreversibel im Filter verbleiben.

Durch die konstruktive Ausgestaltung als keilförmige Filtertaschen und deren Zuordnung zueinander lassen sich die Volumina der Filtertaschen und der diesen zugeordneten und über diese abgegrenzten Gegenräume auf die speziellen Arbeitsbedingungen von Abgaspartikelfiltern abstellen, so dass auch unterschiedlichen Belegungsstärken der Filterflächen durch Verunreinigungen, gegebenenfalls auch Abbrennrückständen konstruktiv Rechnung getragen werden kann, ebenso wie beispielsweise unterschiedlichen Anströmbedingungen, die durch die Anordnung des Partikelfilters im Fahrzeug bedingt sind.

Durch die Veränderung der Volumenverhältnisse zwischen den Filtertaschen und deren Gegenräumen können die Filtertaschen im Abstand zueinander sowie auch bezüglich ihrer räumlichen Anordnung und Formgebung erfindungsgemäß variiert werden, wobei die Variation der Formgebung der Filtertaschen sowohl bezüglich des Verlaufes der Seitenwände wie auch insbesondere bezüglich der Ausgestaltung der Abstumpfung der Längsschneide ohne konstruktiven Mehraufwand möglich ist. Insbesondere kann die Gestaltung der Kantenbereiche der Seitenwände der Filtertaschen durch Umlegen oder Einfalten für diese Zwecke genutzt werden, womit sich gleichzeitig auch verbesserte Bedingungen für die Verschweißung schaffen lassen. Die Aufdickung oder Brückenbildung durch das Umbiegen oder Einschlagen der Kanten kann mit dem Einbringen von Einsatzstücken, insbesondere in Form von Einsatzstreifen verbunden sein, was zur Verbesserung der Schweißbedingungen und/oder zur Aussteifung der Kantenbereiche sowie auch deren Abstumpfung zweckmäßig sein kann.

Die schlanke, spitzwinklige Ausbildung der Filtertaschen macht insbesondere in Verbindung mit einer möglichst dünnwandigen Gestaltung der die Filterflächen enthaltenden Seitenwände die Verwendung einer Stütz- und/oder Gasführungseinlage, im folgenden auch Spacer genannt, für die jeweiligen Filtertaschen zweckmäßig, wobei über diese Einlage auch Einfluss auf die Strömungsverhältnisse innerhalb der Filtertasche im Sinne einer verbesserten Gasführung sowie im Sinne einer Verhinderung der wechselseitigen Beeinflussung bei unterschiedlichen Anströmbedingungen genommen werden kann. Darüber hinaus lässt sich eine derartige Einlage insbesondere auch als Träger für Katalysatormaterialien und dergleichen verwenden, wobei der Einlage auch die Funktion eines thermischen Puffers zum Abgleich von Temperaturspitzen zukommt. Der Spacer ist erfindungsgemäß aus gasundurchlässigem Material ausgebildet und kann deshalb auch den Konturen des Filtermaterials nicht folgen, wodurch ein Gasdurchsatz durch das Filtermedium behindert würde.

In Verbindung mit dem Spacer lassen sich gegebenenfalls auch Maßnahmen zur Eindüsung von Reduktionsmitteln in den anströmseitigen vorderen, spitzen Bereich der Filterinnentaschen in zweckmäßigerweise realisieren. Diesem Zweck kann allerdings auch ein gesondertes Rohrleitungssystem dienen, welches an dem Spacer befestigt ist.

Für die Ausbildung des Spacers ist besonders eine gewellte oder gefaltete, flächige Struktur derselben zweckmäßig, durch die sich gleichzeitig auch Gasführungskanäle schaffen lassen. Diese Gasführungskanäle können erfindungsgemäß auch untereinander in der Art verbunden sein, dass durch die Schlitzung eines Metallbleches und wechselseitige Ausprägung von Wellenstrukturen eine Vermischung des gefilterten Gases möglich ist. Dies hat den Vorteil, dass die Verteilung des am unteren Rand der Filtertaschenschneide einströmenden Gases in höhere Taschenbereiche möglich ist, so dass die Abströmung durch Vergleichmäßigung des Gasstromes strömungstechnisch optimiert wird. Das Erreichen einer solchen Strömungsführung ist erfindungsgemäß auch durch das Ausziehen von bestimmten Bereichen eines Spacerbleches zu erreichen, wobei diese Ausziehungen in Form von Abstandhaltern derart angebracht sind, dass sie das Spacerblech in der Mitte der Filtertaschen fixieren.

Es ist weiterhin erfindungsgemäß zweckmäßig einen aus mehreren Lagen bestehenden Spacer zu verwenden, insbesondere dann, wenn es gilt, die Oberfläche desselben so weit zu vergrößern, dass die damit zur Verfügung gestellte Oberfläche, welche durch entsprechende Prozesse katalytisch wirksam gemacht wird, zur Ausbildung einer nachgeschalteten katalytischen Reaktion ausreicht. Der Spacer kann dabei erfindungsgemäß aus unterschiedlichen hochwarmfesten Materialien bestehen, insbesondere aus Metallen, welche in Form von Blechen oder Schäumen zur Ausbildung eines Spacers verwendet werden können.

Die durch die Erfindung erreichte hohe Flexibilität hinsichtlich der Konfiguration des Filterkörpers macht es auch möglich, diesen bis in den Ein- oder Ausströmkonus des Partikelfilters hineinzuführen und dadurch die Raumausnutzung insgesamt zu verbessern, wobei insbesondere in diesen Bereichen, und hier besonders anströmseitig auch eine Beschichtung mit die Rußtemperatur absenkenden Materialien zweckmäßig ist, während auf der der Rohgasseite gegenüberliegenden Reingasseite bevorzugt eine Beschichtung mit Materialien in Frage kommt, die die Stickoxyd-Reduktion begünstigen.

Die Gestaltung der Filtertaschen als im Querschnitt schlanke und verhältnismäßig langgestreckte Keilelemente, die sich in vorteilhafter Weise zueinander schachteln lassen, ermöglicht desweiteren unterschiedlichste Konfigurationen des Filterkörpers, ohne die Grundform der Filtertaschen ändern zu müssen, und gibt günstige Voraussetzungen für eine zusätzliche Temperaturbeaufschlagung der Filtertaschen insbesondere bei Anströmen mit Rohgas auf die durch die Filtertaschen begrenzten Gegenräume, wobei sich die Filtertaschen im Rahmen der erfindungsgemäßen Anordnung praktisch fingerartig entgegen der Anströmrichtung erstrecken und durch die schneidenartig auslaufenden Keilkonfigurationen der Filtertaschen auch eine vergleichmäßigte Anströmung über deren Umfang und deren gesamte freiliegende Länge erreicht wird.

Insbesondere lassen sich die Filtertaschen im Rahmen der Erfindung auch mit einfachen Mitteln zu einem Filterkörper zusammenfassen, wobei insoweit insbesondere ein randseitiges Umschließen des durch die Filtertaschen gebildeten Filterkörpers über einen Haltering zweckmäßig ist, der gleichzeitig der Abstützung der einzelnen Filtertaschen untereinander sowie des Filterkörpers gegen eine entsprechende Aufnahme, insbesondere ein Gehäuse, und der Abdichtung in der die Taschenöffnungen enthaltenden Ebene zwischen Rohgas- und Reingasseite dienen kann. Insbesondere kann im Rahmen der Erfindung eine Verschweißung der Filtertaschen gegeneinander im austrittsseitigen Bereich, sowie auch gegebenenfalls gegenüber dem Haltering durch ein Angießverfahren mit flüssigem Metall vorgenommen werden, wozu der Filterkörper, gegebenenfalls nach entsprechender Vorwärmung, in eine Metallschmelze getaucht werden kann.

Weitere Einzelheiten und Merkmale der Erfindung ergeben sich aus den Ansprüchen sowie der nachstehenden Beschreibung. Es zeigen:

Fig. 1      in perspektivischer Darstellung die isolierte Anordnung einer Filtertasche in Zuordnung zu den Tragteilen eines Partikelfilters, der bei rotationssymmetrischem Aufbau eine Vielzahl entsprechend angeordneter Filtertaschen aufweist,

Fig. 2      eine vereinfachte Querschnittsdarstellung einer Filtertasche gemäß Fig. 1

Fig. 3 + 4      stirnseitige Ansichten der Filtertaschen gemäß Fig. 2 entsprechend den Pfeilen III und IV,

Fig. 5      ein zu einer Gesamtdarstellung des Partikelfilters ergänzter, von der Darstellung gemäß Fig. 1 ausgehender Aufbau derselben,

Fig. 6      die in Fig. 1 gezeigte, zentrale Verbindung des Partikelfilters in vereinfachter, geschnittener Teildarstellung,

Fig. 7      eine perspektivische, schematische Darstellung einer Filtertasche,

Fig. 8 - 10      in einer Schnittführung gemäß VIII-VIII in Fig. 7 verschiedene Ausgestaltungen von Seitenwandrändern mit Einschlag nach innen,

Fig. 11      in einer Schnittführung gemäß XI-XI in Fig. 7 einen Seitenwandrand mit Einschlag nach außen,

Fig. 12      eine schematisierte Draufsicht gemäß Pfeil XII in Fig. 7,

Fig. 13      eine stirnseitige Ansicht eines Partikelfilters mit über eine Einlage ausgesteiften Filtertaschen,

Fig. 14 + 15      Ansichten einer für die Filtertaschen vorgesehenen Einlage in Form eines Spacers,

Fig. 16 + 17      eine Darstellung eines Filterkörpers mit freiem Kern,

Fig. 18      eine prinzipielle Darstellung eines Partikelfilters mit Aufteilung der Keilflächen,

Fig. 19      eine geschachtelte Anordnung von Filtertaschen für einen Partikelfilter,

Fig. 20      im Schema die Ausbildung eines Partikelfilters mit unregelmäßiger Umfangskontur bei Verwendung erfindungsgemäßer Filtertaschen,

Fig. 21      im Schema die Ausbildung eines aus Filtertaschen aufgebauten Filterkörpers für einen Partikelfilter, dessen Filtergehäuse einen Einlaufkonus aufweist, in den sich der Filterkörper hinein erstreckt,

Fig. 22 + 23      im Schema Ansichten von Filtertaschen gemäß der Erfindung auf deren mit der Taschenöffnung versehene Stirnseite, wobei als Einlagen für die Filtertaschen vorgesehene Spacer in verschiedenen Ausbildungen veranschaulicht sind,

Fig. 24      eine Abwicklung eines mehrlagigen, bezüglich seiner Lagen verbundenen und gefalteten Spacers gemäß Fig. 22,

Fig. 25      eine weitere Darstellung einer Filtertasche mit eingesetztem, mehrlagigen Spacer,

Fig. 26 bis 28      Ansichten der verschiedenen Lagen des Spacers in vereinzelter, aber entsprechender Darstellung, und

Fig. 29      bezogen auf eine Lage eines flächigen, waschbrettartig gewellten Spacers eine Ausbildung desselben derart, dass dieser, quer zu den Wellen verlaufend, geschlitzt und bezüglich aufeinander folgender, über die Schlitze getrennter Abschnitte gegenläufig ausgeformt ist.

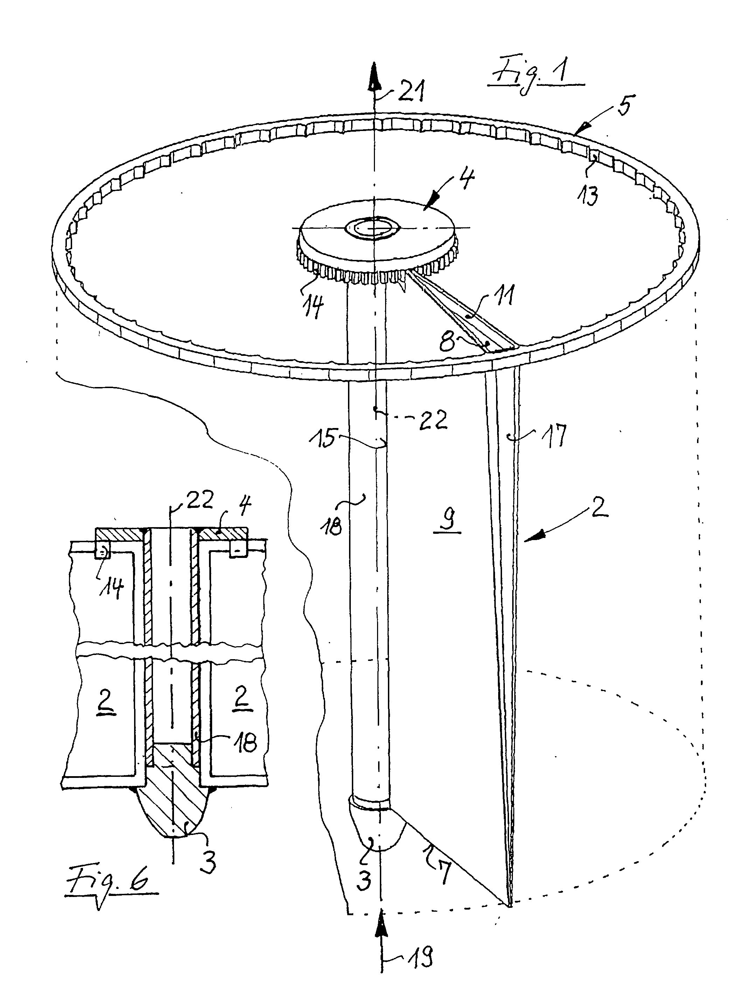

Bezogen auf einen Partikelfilter 1, der in einer perspektivischen Gesamtdarstellung in Fig. 5 gezeigt ist, veranschaulicht Fig. 1 das Aufbauprinzip unter Darstellung einer Filtertasche 2 und der für den Aufbau eines rotationssymmetrischen Partikelfilters 1 gemäß Fig. 5 wesentlichen endseitigen Befestigungsteile, die dargestellt sind als zentraler Stützzapfen 3 am einen Ende sowie radial innerer Haltering 4 und äußerer Haltering 5 am anderen Ende, wobei, wie insbesondere auch aus Fig. 6 ersichtlich, der Stützzapfen 3 und der innere Haltering 4 über ein zentrales Stützrohr 18 verbunden sind.

Über diese Verbindung ergibt sich eine zentrale Aussteifung und Abdichtung, wobei es insbesondere von Vorteil ist, das Stützrohr 18 mit lediglich einem der endseitigen Anschlussteile, dem Haltering 4 oder dem Stützzapfen 3 fest zu verbinden. Bevorzugt erfolgt die feste, insbesondere durch Schweißung gebildete Verbindung gegenüber dem Haltering 4, so dass dieser zusammen mit dem anschließenden Stützrohr 18 auch eine stirnseitige Anschluss- und Überdeckungsverbindung zu den radial inneren Enden der Filtertaschen 2 bildet. Der Stützzapfen 3 ist bevorzugt axial verschiebbar im Stützrohr 18 geführt und seinerseits mit den Filtertaschen 2 an deren Eckseiten 7 radial innen fest verbunden, insbesondere verschweißt, so dass unterschiedliche Dehnungen von Stützrohr 18 und Filtertaschen 2 keine Verspannungen und damit zusätzliche Belastungen für die Filtertaschen 2 bedingen.

Finden bezüglich des Dehnungsverhaltens auch für das Stützrohr 18 Materialien Verwendung, die im Dehnungsverhalten etwa dem der Filtertaschen 2 entsprechen, so kann es im Rahmen der Erfindung auch zweckmäßig sein, das Stützrohr 18 mit den beiden endseitigen Anschlussteilen, so beispielsweise dem Haltering 4 und dem Stützzapfen 3 fest, beispielsweise durch Verschweißung zu verbinden und dadurch eine besonders stabile Trageinheit zu schaffen.

Eine solche Trageinheit kann beispielsweise auch als gebaute Trageinheit ausgeführt sein, wobei die Trageinheit auch zur Befestigung gegenüber einer Aufnahme wie einem Filtergehäuse genutzt werden kann. Hierzu kann es zweckmäßig sein, die endseitig an das Stützrohr 18 anschließenden Teile, wie etwa den Haltering 4 und den Stützzapfen 3 mit Durchgangsbohrungen zu versehen, die die Durchführung axialer Spannmittel erlauben.

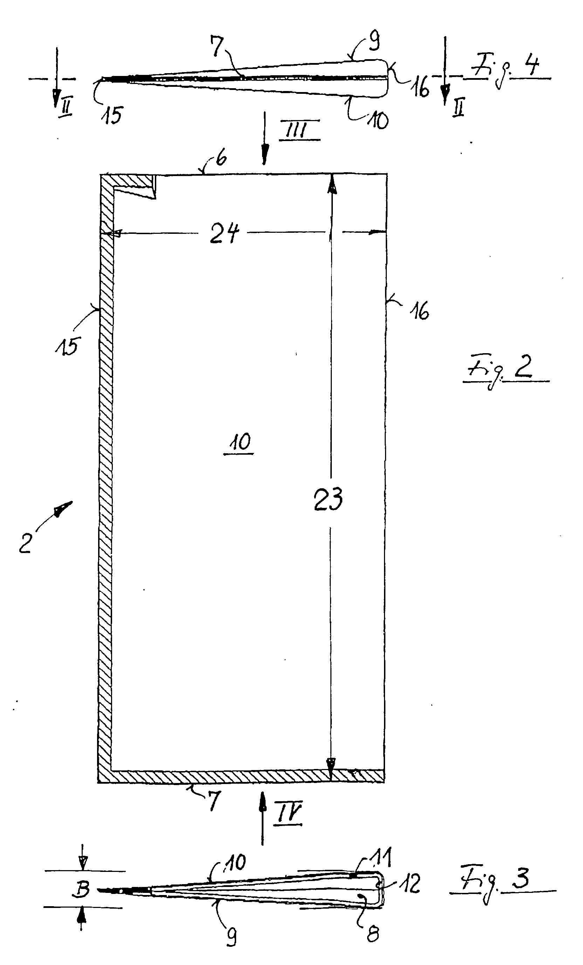

Für die Filtertaschen 2 geht die Darstellung davon aus, dass diese aus Sintermetall bestehen, wobei Ausgangsmaterial für deren Herstellung eigensteife, dünnwandige Sintermetallbleche, gegebenenfalls durch Prägungen und/oder Profilierungen versteift, sind. Im Rahmen der Erfindung liegt es auch, Filterflächen durch Sintermetallfolien oder Matten zu bilden, die auf entsprechende Traggerüste aufgebracht sind, beispielsweise in Form von Lochblechen oder dergleichen, wobei die Aufbringung der labilen Sintermetallfolien oder Matten auf den Träger auf solche Bereiche desselben beschränkt sein kann, in denen eine Filterfunktion gegeben ist, so dass z.B. Rand und Verbindungsbereiche diesbezüglich ausgespart bleiben können. Als Traggerüste kommen auch Gitterbleche, beispielsweise Streckmetall in Frage, wobei Streckmetall zu einer sehr zweckmäßigen erfindungsgemäßen Lösung in Verbindung mit in einem Sinterprozess aufgebrachten Beschichtungen aus Sintermetall führt. Hierbei wird das Sintermetall im wesentlichen nur in die Öffnungen des Trägers eingebracht. Gitterbleche, auch in Form von Streckmetall bieten darüber hinaus den Vorteil, die Öffnungen so zu legen, dass im Bereich der Eckseiten, so beispielsweise der Eckseiten 6 und 7 gemäß Figuren 1 bis 4 eine geschlossene, oder eine zumindest im wesentlichen von Öffnungen freie Struktur gegeben ist, was zur Verschweißung der Seitenwände 9, 10 der Filtertaschen 2 günstig ist. Entsprechend können auch im Bereich der Faltkanten der Filtertaschen besondere Strukturen der Traggerüste, so insbesondere der Gitterbleche gegeben sein, um den Faltvorgang auch scharfkantig ohne Gefährdung für die bereits vorgenommene Sintermetallbeschichtung durchführen zu können, obwohl sich auch beschichtet verhältnismäßig scharfe Faltkanten ohne Beschädigung der Beschichtung realisieren lassen.

Fig. 1 bis 4 veranschaulichen jeweils eine Filtertasche 2 in ihrer geometrischen Figur, wobei die Filtertaschen 2 eine viereckige Grundform bei dreiecksförmigem Querschnitt aufweisen. Von den vier Eckseiten 6, 7; 15, 16 der Filtertasche 2, die im Ausführungsbeispiel in der Grundform ein langgestrecktes Rechteck bildet, weist die eine der stirnseitigen Eckseiten 6 und 7, im Ausführungsbeispiel die Eckseite 6 eine Taschenöffnung 8 auf, die sich, entsprechend dem Dreiecksquerschnitt der Filtertasche 2, radial nach innen und damit in Bezug auf den Dreiecksquerschnitt in Hochrichtung, spitzwinklig verjüngt und die Fläche der Eckseite 6 bestimmt, so dass die Seitenwände 9 und 10 der Filtertasche 2 die Schenkel der Taschenöffnung 8 bilden, wobei, wie Fig. 1 und 3 zeigen, im Bereich der Taschenöffnung 8 und diese quasi auskleidend ein Einsatzstreifen 11 vorgesehen sein kann, der sich zumindest über den radial äußeren Bereich der Seitenwände 9 und 10 erstreckt und als U-förmiger Bügel mit seinem Steg 12 die dreiecksförmige Taschenöffnung 8 in ihrer Breite (Deckwand 17) übergreift. Abgesehen von einer vorteilhaften Aussteifungsfunktion - im Sinne von Tragspeichen, die auch gesondert vorgesehen werden könnten - ist die Verwendung eines solchen Einsatzstreifens 11 - analog zu einem Einsatzstück - zweckmäßig, um eine stirnseitige Verschweißung, insbesondere eine Schmelzverschweißung der Seitenwände 9, 10 von in Umfangsrichtung aneinander grenzenden Filtertaschen 2 zu erleichtern oder zu ermöglichen, wobei der Steg 12 auch die Möglichkeit bietet, die Fixierung gegenüber dem Haltering 5 insbesondere durch Verschweißung zu erreichen.

Die lagerichtige Fixierung der Filtertasche 2 gegenüber dem radial äußeren Haltering 5 wird dadurch erleichtert, dass dieser mit radialen, zahnartigen, dreiecksförmigen Ansätzen 13 versehen ist, die jeweils umfangsseitig von radial außen die Filtertaschen 2 etwas übergreifen.

Radial innen sind die Filtertaschen 2 über den inneren Haltering 4 zu fixieren, der in radialer Überdeckung zu dem radial inneren Endbereich der Filtertaschen 2 im Bereich der Eckseite 6 liegt, wobei die Eckseite 6 in diesem Überdeckungsbereich geschlossen ist, gegebenenfalls bei entsprechender Ausklinkung, und wobei, analog zu den Ansätzen 13, dem inneren Haltering 4 axiale, zahnartige Ansätze 14 zugeordnet sind, von denen jeweils benachbarte den Eingriffsraum für eine Filtertasche 2 bilden. Entsprechend dieser Anordnung bilden die Filtertaschen 2, bzw. deren Seitenwände 9 und 10 im Bereich der Taschenöffnung 8 quasi radiale Speichen zwischen dem inneren Haltering 4 und dem äußeren Haltering 5, wobei der Dreiecksquerschnitt der Filtertaschen 2 in Verbindung mit hinreichender Steife der Seitenwände 9 und 10 die Formhaltigkeit der Filtertaschen 2 auch unter den extremen Temperaturbedingungen gewährleistet, denen ein Partikelfilter, insbesondere ein mit Rußabbrennung arbeitender Partikelfilter ausgesetzt ist.

Zur Eigensteife der Filtertaschen 2 trägt deren weitere Formgebung bei, die dadurch gekennzeichnet ist, dass die Filtertaschen 2 sich radial in Hochrichtung, d.h. bezogen auf eine rotationssymmetrische Ausbildung des Filterkörpers nach innen keilförmig verjüngen und dieser Grundform, ausgehend von der Taschenöffnung 8, eine axial keilförmige Verjüngung überlagert ist, so dass die Seitenwände 9 und 10 radial nach innen zusammenlaufen und dementsprechend bezüglich dieser Eckseite 15 der Filtertasche 2 ebenso eine Keilschneide bilden wie bezüglich der der Taschenöffnung 8 gegenüberliegenden Eckseite 7, wobei radial innen eine Abstützung über das Stützrohr 18 erfolgen kann, das zugleich die Abgrenzung zwischen benachbarten Filtertaschen 2 nach radial innen mit Vorteil übernehmen kann.

Über die Deckwand 17 als eine Brücke zwischen den Seitenwänden 9 und 10 ergibt sich bezüglich der Filtertasche 2 eine dreiecksförmige, die Seitenwände 9 und 10 aussteifende Verbindung, so dass der von den Filtertaschen 2 umschlossenen Kern offen gelassen werden kann und für die Abgasführung frei bleibt.

Für die Deckwand 17 ist es zweckmäßig, diese einstückig zusammen mit den Seitenwänden 9 und 10 aus einer einstückigen Platine zu formen, beispielsweise zu biegen, insbesondere zu falten, wobei in Folge der sehr schlanken, spitzwinkligen Konfiguration der Deckwand 17 die Platine einen nahezu rechtwinkligen Querschnitt aufweist, der sich bei nur geringen Zuschnittsverlusten aus entsprechend großflächigen Platinen oder auch aus Rollenmaterial herstellen lässt.

Bezogen auf das dargestellte Ausführungsbeispiel mit einer Vielzahl von einen rotationssymmetrischen Filterkörper bildenden Filtertaschen 2 ist ein Aufbau mit etwa 50 (fünfzig) aneinander anschließenden Filtertaschen 2 gegeben, so dass sich für diese ein radial nach außen öffnender Keilwinkel von etwa 7° ergibt, was bei einer axialen Taschenlänge, die im Ausführungsbeispiel etwa der doppelten Höhe der Tasche entspricht, einem axialen, sich gegen die Taschenöffnung 8 öffnenden Keilwinkel von etwa 3 bis 4° entspricht. Die im Bereich der Taschenöffnung 8 gegebene Keilrückenbreite, d.h. die Breite der Deckwand 17 im Bereich der Taschenöffnung 8 liegt etwa beim achten Teil der Höhe 24 der Filtertasche 2, deren Länge in Fig. 2 mit 23 bezeichnet ist. Bezogen auf Filterkörper mit 60 (sechzig) Filtertaschen ergibt sich ein radial nach außen öffnender Keilwinkel von etwa 6°, und es erweist sich eine Auslegung als zweckmäßig, bei der die Breite der Taschenöffnung 8 zwischen dem 6. und dem 9. Teil der Höhe 24 der Filtertasche 2 liegt.

Im Rahmen der Erfindung erweisen sich für mit Rußabbrennung arbeitende Partikelfilter, insbesondere Partikelfilter mit rotationssymmetrischem Aufbau des Filterkörpers, in Bezug auf die keilförmigen Filtertaschen 2 Keilrückenbreiten B zwischen 5 bis 12 mm, bevorzugt werden 6 - 8 mm, als besonders vorteilhaft. Dies insbesondere in Verbindung mit Lösungen, bei denen ein Filterkörper mit um ein Zentrum gruppierten Keilfiltertaschen vorgesehen ist und - bei einer Keilrückenbreite zwischen 5 und 12 mm, insbesondere 6 - 8 mm, - die Zahl der Filtertaschen zum Durchmesser des Filterkörpers im Bereich von

$$0,26 \times D < n < 0,52 \times D$$

liegt, wobei mit D der Durchmesser des Filterkörpers und mit n die Zahl der Filtertaschen bezeichnet ist.

Dies gilt in analoger Weise auch für Filterkörper mit unrundem Umfang, wenn als Äquivalent zu deren jeweiliger Filterfläche eine Filterfläche gleicher Größe für einen Filterkörper mit Kreisquerschnitt bzw. Kreisringquerschnitt mit kleinem, durch das Zusammenlaufen der Filtertaschen bedingtem Kern angesetzt wird, und umgekehrt, so dass unterschiedliche Formkonfigurationen von Filterkörpern im Rahmen der erfindungsgemäßen Verwendung von keilförmigen Filtertaschen ohne größeren Versuchs- und Erprobungsaufwand gestaltet werden können.

Ferner erweist sich insbesondere bei einer entsprechenden Zahl der Filtertaschen 2 ein axialer, sich gegen die Taschenöffnung 8 öffnender Keilwinkel $\alpha$ für die Filtertaschen als zweckmäßig, für den gilt:

$$1° < \alpha < 4,5°.$$

In Verbindung damit ist ein Verhältnis der Keilrückenbreite B im Bereich der Taschenöffnung 8 zur der Filtertaschenlänge 23 entsprechenden Keillänge L zweckmäßig, für das gilt:

$$10 < L / B < 80,$$

insb.

$$10 < L / B < 60.$$

Des Weiteren erweist sich eine Festlegung der Filterfläche F im Verhältnis zur maximal über dem Filter strömenden Luftmasse m als zweckmäßig, für die gilt:

$$200 < m/F < 350,$$

wobei die Luftmasse m in kg/h und die Filterfläche F in $m^2$ erfasst wird.

Mit einem derart optimierten Filterkörper ergeben sich auch unter Kostengesichtspunkten besonders vorteilhafte Ergebnisse.

Ein für die Praxis besonders interessanter, mittlerer Bereich liegt erfindungsgemäß bei

$$250 < m/F < 270$$

und eine diesbezügliche Ausführungsform, die für aufgeladene Fahrzeug-Dieselmotoren mit einem Hubvolumen von etwa 2 Litern auf einen maximalen Luftmassendurchsatz von 450 kg/h bei einer Filterfläche von 1,7 $m^2$ ausgelegt ist, weist erfindungsgemäß, bezogen auf einen Filterkörper mit um ein Zentrum gruppierten Filtertaschen, insbesondere einen im Querschnitt Kreisform aufweisenden Filterkörper, bei etwa 60 Filtertaschen folgende Auslegung auf: Bezogen auf die Filtertaschen eine Länge von 250 mm, eine Keilrückenbreite von etwa 7 mm und eine Höhe von etwa 60 mm.

In Fig. 2 ist durch die Schraffierung der Randbereiche längs der Eckseiten 6, 7 und 15 angedeutet, dass die Seitenwände 9, 10 dort mit Vorteil flächig, beispielsweise durch Widerstandsschweißung verbunden sind, so dass die Herstellung der Filtertaschen 2 auch diesbezüglich gut zu beherrschen ist.

Im Bereich ihrer den Taschenöffnungen 8 gegenüberliegenden Enden sind die Filtertaschen 2 zentral mit dem Stützzapfen 3 verbunden, wobei der Stützzapfen 3 in den durch die Eckseiten 15 der Filtertaschen 2 umschlossenen Ringraum eingreift und wobei die Filtertaschen 2 mit dem Stützzapfen 3 im Eckbereich zwischen ihren radial inneren Eckseiten 15 und den den Taschenöffnungen 8 gegenüberliegenden Eckseiten 7 bevorzugt verschweißt sind, wie in Fig. 6 veranschaulicht.

Ein derart aufgebauter, zur zentralen Achse 22 symmetrischer Partikelfilter 1 wird bevorzugt, wie Fig. 5 durch den Pfeil 19 veranschaulicht, stirnseitig gegen die geschlossenen Enden der Filtertaschen 2 angeströmt, wobei das Rohgas zwischen die in Durchströmungsrichtung (Pfeil 19) sich verjüngenden Keilräume 20 - als Gegenräume zu den Filtertaschen 2 - zwischen benachbarten Filtertaschen 2 einströmt, und über die Seitenwände 9, 10 radial in den Innenraum der Filtertaschen 2 einströmt und diese über die Taschenöffnung 8 abströmseitig (Pfeil 21) verlässt. Die Keilform der Filtertaschen 2 führt im Verbund des Partikelfilters 1 zu günstigen Reinigungsmöglichkeiten für die dadurch entstehenden Spalträume.

Ein derartig aufgebauter Partikelfilter 1 bietet große Filterflächen auf kleinem Bauraum und eignet sich besonders auch zum Einbau in nicht dargestellte Filtergehäuse, die in konventioneller Weise in Abgasanlagen zu integrieren sind, wobei die Gestaltung des Partikelfilters 1 in günstiger Weise auch Lösungen ermöglicht, bei denen der Partikelfilter 1 insbesondere auch zu Reinigungszwecken ohne großen Aufwand entnommen werden kann.

Der erfindungsgemäße Aufbau eines Partikelfilters 1 mit keilförmigen Filterflächen aus Sintermetall aufweisenden Filtertaschen 2, deren stumpfen, stirnseitigen Keilenden die Taschenöffnungen 8 zugeordnet ist und deren Seitenwände 9, 10 als Keilflächen jeweils gegen das der Taschenöffnung 8 gegenüberliegende Keilende und gegen die eine der zwischen den Keilenden verlaufende Eckseite 15 als Keilflanken in einer Keilschneide auslaufen, eignet sich aufgrund der durch die Seitenwände 9, 10 als Keilflächen gegebenen großflächigen, ebenen Filterflächen in besonderer Weise auch für Gestaltungen, bei denen die Filterflächen durch flexible Sintermetallmatten oder Sintermetallfolien gebildet sind, denen zur Bildung der Seitenwände der Filtertaschen 2 gesonderte Tragstrukturen zugeordnet sind, beispielsweise also Lochbleche oder in anderweitiger Weise ausgebildeter Stützgerüste, wie insbesondere Gitterbleche in Form von Streckmetall, so dass die Seitenwände 9, 10 einen mehrschichtigen Aufbau aufweisen, mit dem Vorteil, dass die Sintermetallstrukturen in ihrer Konzeption unter Vernachlässigung der Tragfunktion auf die Filterfunktion ausgelegt werden können.

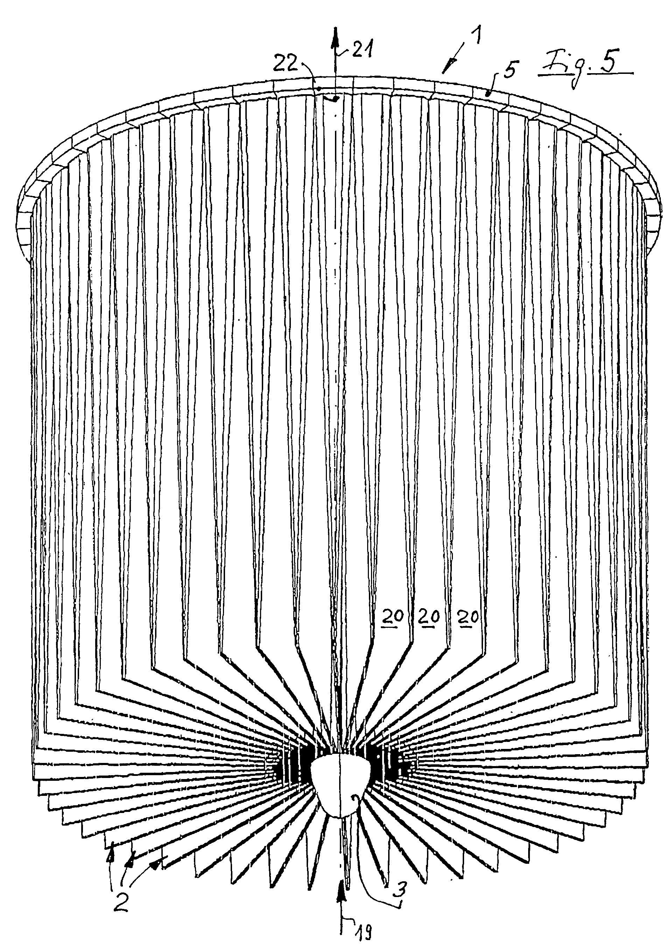

Figuren 7 bis 12 zeigen schematisiert Ausgestaltungen erfindungsgemäßer Filtertaschen, wie sie unter Fertigungsgesichtspunkten(Fig. 8 bis 11) sowie auch unter dem Gesichtspunkt der Realisierung unterschiedlicher Volumina der Filtertaschen 2 zu deren Gegenräumen zweckmäßig sind, wobei als Gegenräume die über die Filtertaschen 2 begrenzten, in Gegenrichtung offenen und jeweils zwischen aufeinander folgenden Filtertaschen 2 liegenden Keilräume 20 (Fig. 5) bezeichnet sind und wobei im Rahmen der Erfindung diese Gegenräume bevorzugt mit dem ungereinigten Abgas - Rohgas - angeströmt werden. Die Anströmrichtung ist durch den Pfeil 19 symbolisiert. Damit ergibt sich die Ablagerung ausgefilterter Partikel an den Außenflächen der Filtertaschen 2, während das insbesondere über die Seitenwände in die Filtertaschen eintretende, gereinigte Abgas über die Taschenöffnungen 8 austritt, wie über den Pfeil 21 in Fig. 5 symbolisiert.

Bezogen auf die in Fig. 7 im Schema gezeigte Filtertasche 2 veranschaulichen die Fig. 8 bis 10 Schnitte durch die der Eckseite 15 zugeordnete Längsschneide der Filtertasche 2, zu der die der Eckseite 7 zugeordnete Querschneide anlog ausgebildet ist. In den Fig. 8 bis 10 sind die Seitenwände 9, 10 der Filtertasche 2 auslaufend auf die durch die Eckseite 15 gebildete Längsschneide veranschaulicht, und es sind die Seitenwände 9, 10 im Bereich ihrer der Eckseite 15 zugeordneten Kante eingeschlagen, wobei der jeweilige Einschlag 25 bzw. 26 in den Fig. 8 und 9 als Doppeleinschlag veranschaulicht ist und durch Einbiegen, Einschlagen, Einrollen oder dergleichen geschaffen werden kann. Gegebenenfalls ist auch lediglich ein einfacher oder, über das Gezeigte hinaus, ein mehrfacher Einschlag 25, 26 möglich, wobei die gegeneinander über die Einschläge 25, 26 im Bereich der Eckseite 15 zur Anlage kommenden Seitenwände 9, 10 durch die Einschläge aufgedickt werden. Im Bereich dieser Aufdickung, die im Rahmen der Erfindung auch im Hinblick beispielsweise auf eine bessere Verschweißbarkeit verdichtet sein kann, kann im Rahmen der Erfindung zusätzlich eine Einlage oder ein Einsatz, wie durch das Einsatzstück 27 veranschaulicht, vorgesehen werden, wobei das Einsatzstück 27 beispielsweise durch einen eingelegten Streifen gebildet ist. Dieser Streifen ist in der Ausgestaltung gemäß Fig. 9 zwischen den Einschlägen 25, 26 vorgesehen, und Fig. 10 zeigt eine Ausgestaltung, bei der, wie für die Seitenwand 10 veranschaulicht, lediglich ein Einfacheinschlag 28 vorgesehen ist, und dieser Einschlag über ein Einsatzstück 30 erfolgt. Dies kann in analoger Weise auch für die gegenüberliegende, nicht dargestellte Seitenwand erfolgen. Es kann im Rahmen der Erfindung aber auch, und dies gilt entsprechend für die Ausgestaltungen gemäß Fig. 8 und 9, lediglich bezüglich einer der Seitenwände 9 oder 10 im Bereich der Eckseite 15, und korrespondierend hierzu auch im Bereich der Eckseite 7, eine entsprechende Verdickung vorgesehen sein.

Entsprechend der jeweiligen Ausgestaltung der Einschläge 25, 26, 28 und/oder der Einsatzstücke 27, 30 sowie deren Bemessung ergibt sich für die den Eckseiten 7 und 15 zugeordneten Schneiden eine Abstumpfung bzw. Verbreiterung, und dementsprechend auch eine Vergrößerung des Volumens der Filtertasche 2.

Eine Veränderung des Verhältnisses zwischen dem Volumen der jeweiligen Filtertasche 2 und den jeweils zugehörigen keilförmigen Gegenräumen 20 ist im Rahmen der Erfindung auch dadurch zu erreichen, dass die Filtertaschen im Filterverbund jeweils beabstandet zur benachbarten Filtertasche angeordnet werden, also im Bereich der Taschenöffnung 8 mit den dieser zugeordneten freien Kanten ihrer Seitenwände 9, 10 nicht unmittelbar an die korrespondierende Seitenkante der jeweils nächstfolgenden Filtertasche 2 angrenzen.

Eine entsprechende Abstandsüberbrückung kann, wie in Fig. 11 veranschaulicht, dadurch erfolgen, dass die jeweiligen Seitenwände 9, 10, im Gegensatz zu Fig. 8 bis 10, bezogen auf die jeweilige Filtertasche 2, nach außen eingeschlagen werden, wobei die entsprechenden Einschläge in Fig. 11 mit 31 und 32 bezeichnet sind und wobei die Seitenwand 10 der bezogen auf die Darstellung gemäß Fig. 6 nächstfolgenden und nicht gezeigten Filtertasche 2 nur strichliert dargestellt ist. Ein Einschlag 31 bzw. 32 kann auch lediglich einer der jeweils aufeinander folgenden Filtertaschen zugeordnet sein, und mit. einem Einschlag 31 bzw. 32 und/ oder einem in der Fig. 11 nicht veranschaulichten Einsatzstück ergibt sich eine vorteilhafte und zweckmäßige Ausgestaltung im Hinblick auf eine Verbindung aufeinander folgender Filtertaschen im Bereich der den Taschenöffnungen 8 zugeordneten Ebene.

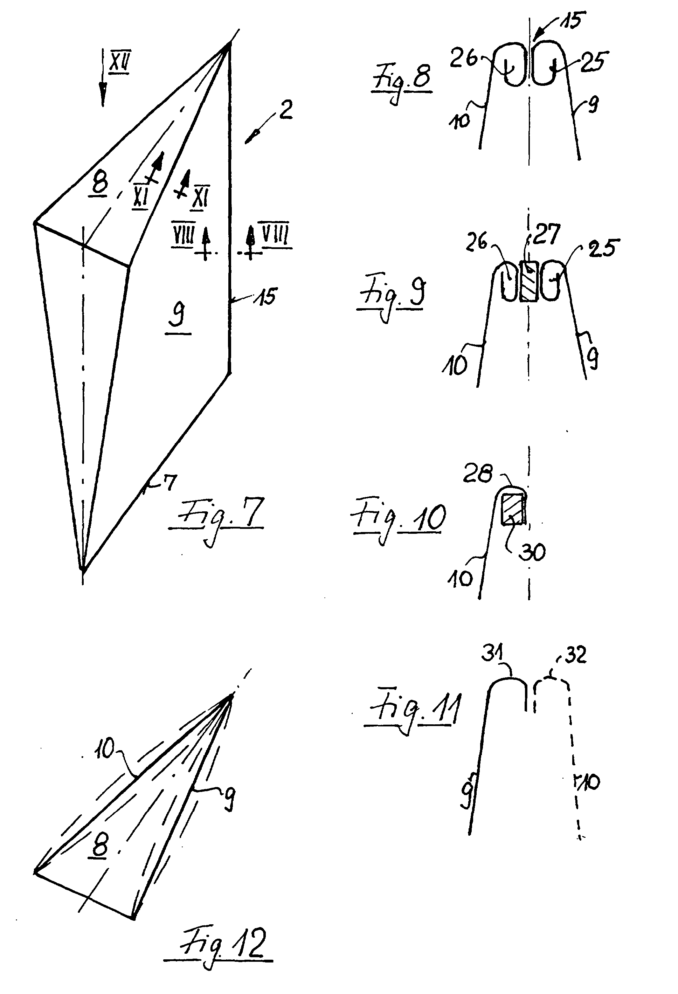

Eine weitere Möglichkeit zur Einflussnahme auf die vorstehend angesprochenen Volumenverhältnisse von Filtertaschen 2 und Gegenräumen 20 veranschaulicht Fig. 12, in der in einer schematisierten Draufsicht gemäß Pfeil XII in Fig. 7 für die Seitenwände 9, 10 ein ausgebauchter oder ein eingezogener Verlauf angedeutet ist.

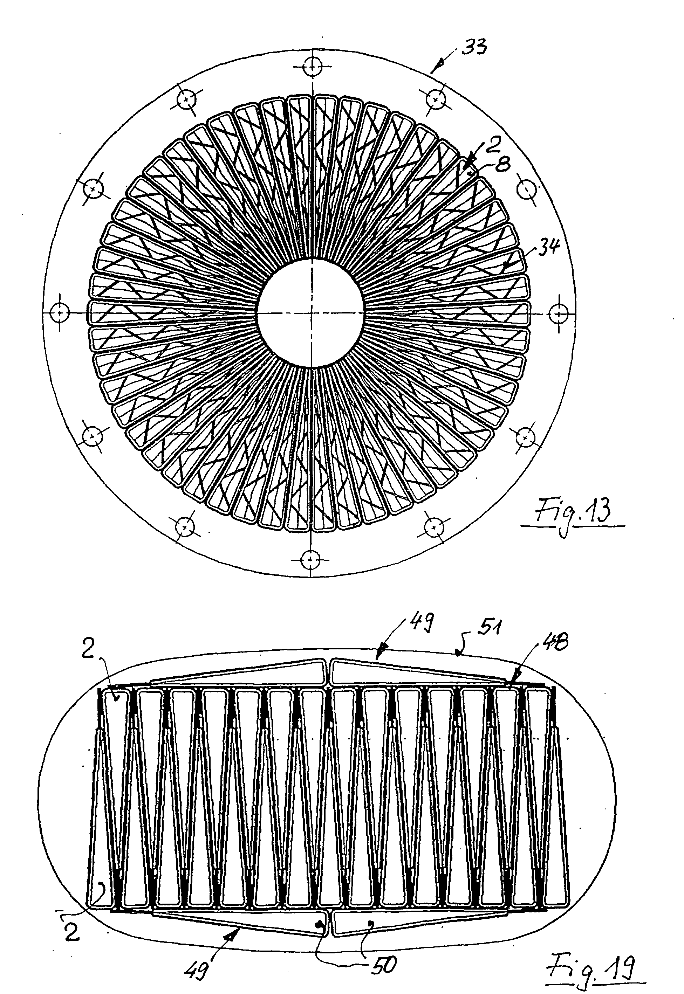

Fig. 13 zeigt eine Draufsicht auf die Stirnseite eines im prinzipiellen Aufbau der Darstellung gemäß Fig. 5 entsprechenden Partikelfilters 33, wobei der gezeigten Stirnseite die Taschenöffnungen 8 der Filtertaschen 2 zugeordnet sind, und wobei die Draufsicht erkennen lässt, dass in den Filtertaschen 2 Stütz- und/ oder Gasführungseinlagen in Form sogenannter Spacer 34 angeordnet sind.

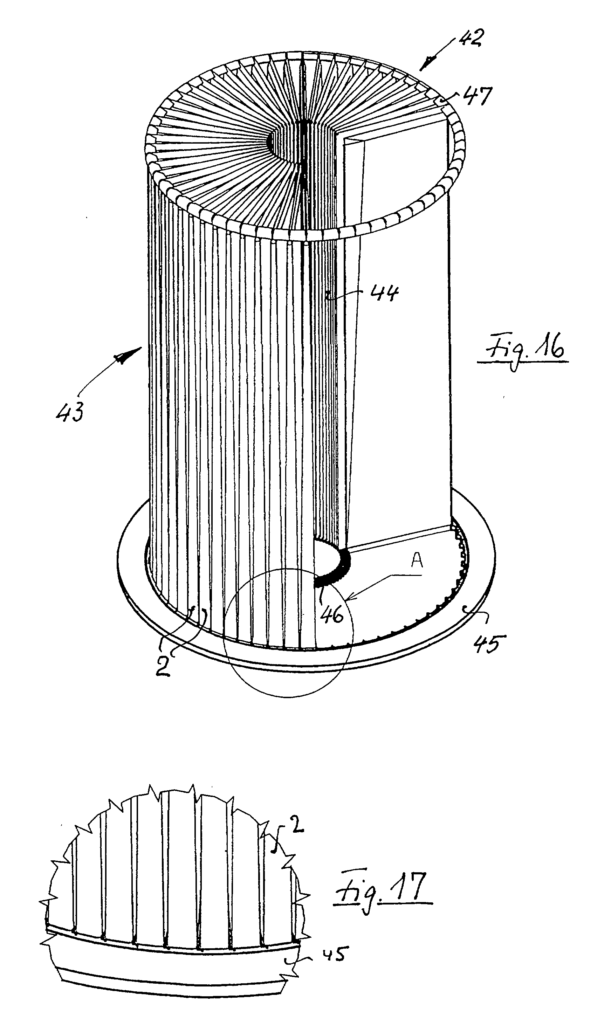

Fig. 14 und 15 zeigen in schematisierten Ansichten (Fig. 14) bzw. in Perspektive (Fig. 15) die Ausgestaltung eines solchen Spacers 34 in Form eines Wellprofiles, das sich, wie Fig. 13 veranschaulicht, mit seinen Wellenbergen wechselseitig gegen die einander gegenüberliegenden Seitenwände 9, 10 einer Filtertasche 2 abstützt. Entsprechend dem keilförmigen Querschnitt der Filtertaschen 2 ergibt sich eine Abflachung der Wellprofile in Richtung auf die Schneiden bildenden Eckseiten der jeweiligen Filtertasche 2, denen bezüglich der Längsschneide die Längskante 36 und bezüglich der Querschneide die Querkante 37 des insgesamt flächigen Spacers 34 entspricht. Stirnseitige Draufsichten dieser Einlage sind durch die Welllinien 38 und 39 symbolisiert. Fig. 14 und 15 veranschaulichen desweiteren, dass bezogen auf eine Durchströmungsrichtung 40 der jeweiligen Filtertasche, deren Taschenöffnung 8 die Querkante 41 der Einlage 34 zugeordnet ist, die durch die Wellkontur der Einlage gebildeten Kanäle 35 bezogen auf die Durchströmungsrichtung 40 gegen die der Längsschneide entsprechende Längskante 36 leicht gefächert zulaufen, um das Querschnittsprofil der Filtertasche für die über die Seitenwände eintretenden und die Filtertasche durchströmenden Abgase bestmöglich zu nutzen.

Die Einbindung des Spacers 34 in die jeweilige Filtertasche 2 erfolgt bevorzugt im Bereich der jeweiligen, der Querschneide bzw. der Längsschneide entsprechenden Eckseiten 7 bzw. 15, wobei die Einlage gleichzeitig auch im Sinne der Darlegungen zu Fig. 9 und 10 als Einsatzstück zu nutzen ist.

Im Sinne der angedachten Gasführungsfunktion ist der Spacer 34 bevorzugt geschlossenflächig ausgebildet, beispielsweise durch ein Einlageblech, wobei dem Spacer zusätzlich zur Stützfunktion für die möglichst dünnwandigen, Sinterflächen bildenden Seitenwände 9, 10 auch Funktionen hinsichtlich der Abgasnachbehandlung zugeordnet sein können, beispielsweise durch katalytische Beschichtungen. Daneben bildet die Einlage auch einen Wärmepuffer und trägt damit zu einer Vergleichmäßigung der Temperaturverteilung bei.

Während die Fig. 1 bis 5 die Ausbildung eines aus Filtertaschen aufgebauten Partikelfilters mit geschlossenem Kern veranschaulichen, zeigen Fig. 16 und 17 eine Ausgestaltung eines Partikelfilters 42 mit über die Länge des Filterkörpers 43 offenem Kern 44, wobei der Kern 44 im Bereich der hier nicht sichtbaren Taschenöffnungen der Filtertaschen 2 abgeschlossen ist und wobei die Filtertaschen 2 im Bereich der Ebene ihrer Taschenöffnungen über einen radial äußeren Haltering 45 und einen radial inneren Zentrierring 46 gefasst sind und ihrerseits mit ihren durch die Eckseiten 7 gebildeten Querschneiden eine speichenartige Verbindung zwischen dem Haltering 45 und dem Zentrierring 46 bilden, wobei über den Haltering 45 die Fixierung des Filterkörpers 43 in einem entsprechenden Gehäuse, das nicht dargestellt ist, vorgenommen werden kann. Am gegenüberliegenden Ende ist für die Filtertaschen 2 lediglich eine radial äußere Fixierung über einen Haltering 47 vorgesehen, wobei die Halteringe beispielsweise durch Verschweißung mit den jeweiligen Filtertaschen verbunden sind. Radial innen stoßen die Filtertaschen 2 mit ihren Längsschneiden gegeneinander und stützen sich gegeneinander ab, wobei ein gasdichter Anschluss nicht erforderlich ist und eine radiale Durchströmung im Sinne einer möglichst gleichmäßigen Beaufschlagung der Filterflächen auch im radial inneren Bereich der Seitenwände Vorteile erbringt.

Bezüglich des Halteringes 45 ist in Fig. 17 dessen Anbindung an die Filtertaschen 2 vergrößert dargestellt, wobei der Haltering 45 im Rahmen der Erfindung gegebenenfalls auch durch Angießen mit den Filtertaschen verbunden sein kann.

Im Rahmen der Erfindung lassen sich mit keilförmigen, erfindungsgemäßen Filtertaschen auch Filterkörper schaffen, die von einer rotationssymmetrischen Gestaltung, wie sie in den vorstehenden Ausführungsbeispielen gezeigt und erläutert ist, abweichen. So lassen sich beispielsweise durch unterschiedliche Höhe der Filtertaschen ovale Filterkörper bilden, sowie auch im Umfang eingezogene unrunde Filterkörper formen.

Ein Beispiel dieser Art zeigt Fig. 19, wobei die keilförmigen Filtertaschen 2 bei gleicher Erstreckung und der gleichen Ebene zugewandten Taschenöffnungen 8 gegensinnig zueinander zusammengefügt sind, so dass sich ein in der Grundform rechtwinkliger Filterkörper 48 ergibt. Im Rahmen der Erfindung kann diesem rechtwinkligen Filterkörper, auch zur wechselseitigen Verbindung der Filtertaschen 2, eine deckel- und bodenseitige Überdeckung 49 zugeordnet sein, die durch rückseitig aneinander anliegende und mit einer ihrer Seitenwände gegen die Filtertaschen 2 des rechteckigen Filterkörpers 48 anliegende Filtertaschen 50 gebildet ist. Dadurch lässt sich zusätzliches Filtervolumen gewinnen, und dies in Anpassung an in der Praxis gebräuchliche flachovale Gehäuse 51 von Partikelfiltern. Auch bei einer derartigen Ausgestaltung kann eine entsprechende katalytische Beschichtung vorgesehen sein, wobei es im Rahmen der Erfindung zweckmäßig ist, über diese die Rußzündtemperatur herabzusetzen und/oder die Stickoxyd-Reduktion und / oder die Produktion von $NO_2$ zu fördern. Rohgasseitig ist hierzu zweckmäßigerweise die katalytische Beschichtung in Richtung auf die Absenkung der Rußzündtemperatur und der $NO_2$-Produktion gewählt, reingasseitig im Hinblick auf die katalytische Zersetzung von Stickoxyden.

Fig. 20 zeigt im Schema und in Draufsicht auf die die Taschenöffnungen enthaltenden Seiten der Filtertaschen 52 in ähnlicher Weise eine zeilenförmige Anordnung von Filtertaschen bei bezüglich des dreiecksförmigen Taschenquerschnittes gegenläufiger Anordnung, und es ist desweiteren gezeigt, dass bei Schichtung mehrerer Zeilen 53, 54 von jeweils gegenläufig angeordneten Filtertaschen sich auch völlig unregelmäßige Umfangskonturen gestalten lassen, wie dies beispielsweise aus Platzgründen in Fahrzeugen zweckmäßig sein kann.

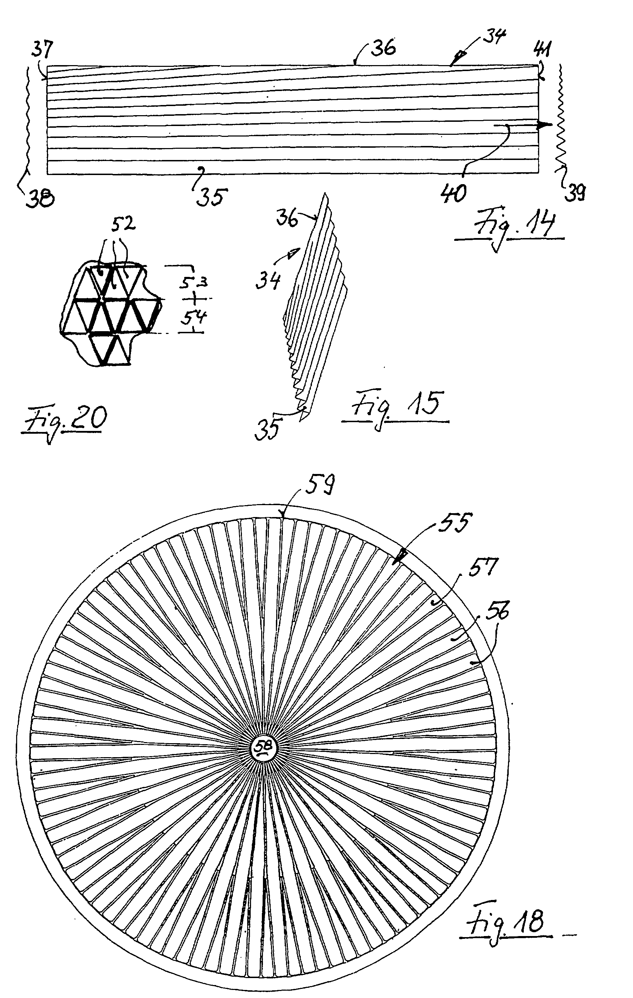

Die Fig. 18 zeigt in weiterer Ausgestaltung der Erfindung eine zusätzliche Ausführungsform eines Partikelfilters mit einem Filterkörper 55, der aus Filtertaschen 56 und 57 aufgebaut ist, wobei eine solche Ausgestaltung insbesondere für Partikelfilter großen Durchmessers zweckmäßig ist, bei denen sich entsprechend der großen Höhe der Filtertaschen in deren radial äußerem Bereich eine besonders große Keilrückenbreite ergäbe, mit der Folge eines ungünstigeren Verhältnisses von Filterfläche zu Filtervolumen. Um dies zu vermeiden, sind die über die Höhe zwischen Kern 58 und Umfang 59 sich erstreckenden Filtertaschen 56 in ihrem radial äußerem Bereich mit Abflachungen des Keilwinkels vorgesehen, so dass sich zwischen aufeinander folgenden Filtertaschen 56 nach radial außen öffnende Keile ergeben, in denen radial kürzere Filtertaschen 57 angeordnet sind.

Fig. 21 zeigt im Schema einen Schnitt durch einen Partikelfilter 1 gemäß der Erfindung, wobei von diesem nur der rohgasseitige Eintrittsbereich - die Anströmrichtung ist durch den Pfeil 60 symbolisiert - gezeigt ist, in dem das Gehäuse 61 des Partikelfilters mit dem Eintrittskonus 62 versehen ist. Mit 63 ist der aus Filtertaschen 64 gemäß der Erfindung aufgebaute Filterkörper bezeichnet, der in Optimierung der Raumnutzung sich bis in den Eintrittskonus 62 erstreckt. Durch den gestuften Aufbau des Filterkörpers 63 im Bereich des Eintrittskonus 62 und den vorgesehenen Abstand zum Filtergehäuse 61 ist eine im Wesentlichen gleichmäßige Beaufschlagung der Filtertaschen 64 gewährleistet. Eine entsprechende Ausgestaltung kann auch austrittsseitig im Rahmen der Erfindung zweckmäßig sein.

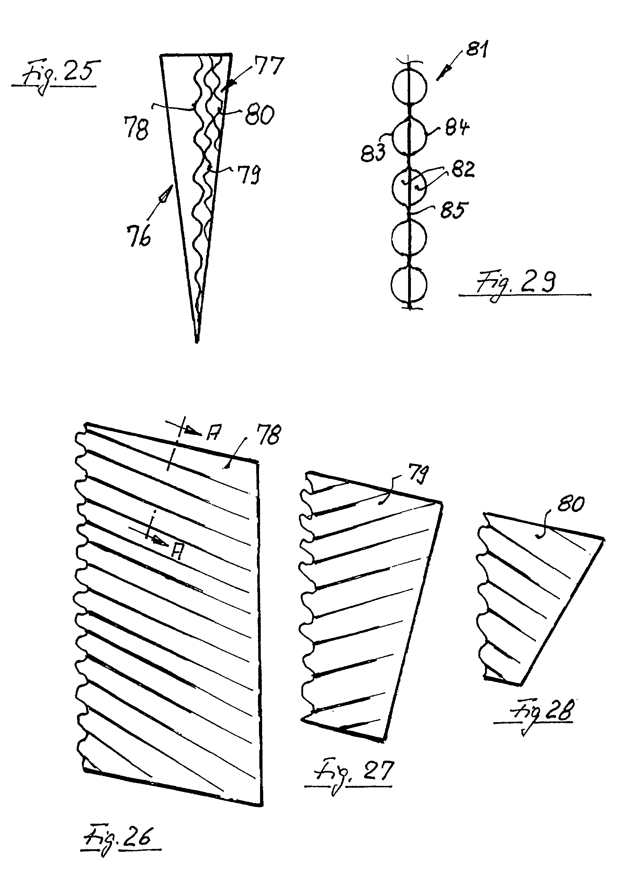

Fig. 22 bis 24 veranschaulichen verschiedene Ausgestaltungen von als Stütz- und/oder Gasführungseinlage ausgebildeten Spacern 65, 66, bezogen auf den Spacer 65 in einer flächigen Abwicklung, die in Fig. 24 dargestellt sind. Diese lässt erkennen, dass die einzelnen Lagen 67, 68 bei einander überkreuzender Erstreckung ihrer Wellenprofile übereinander liegen, so dass sich bezogen auf die durch die Filtertasche strömenden Reingase eine intensive Verwirbelung ergibt.

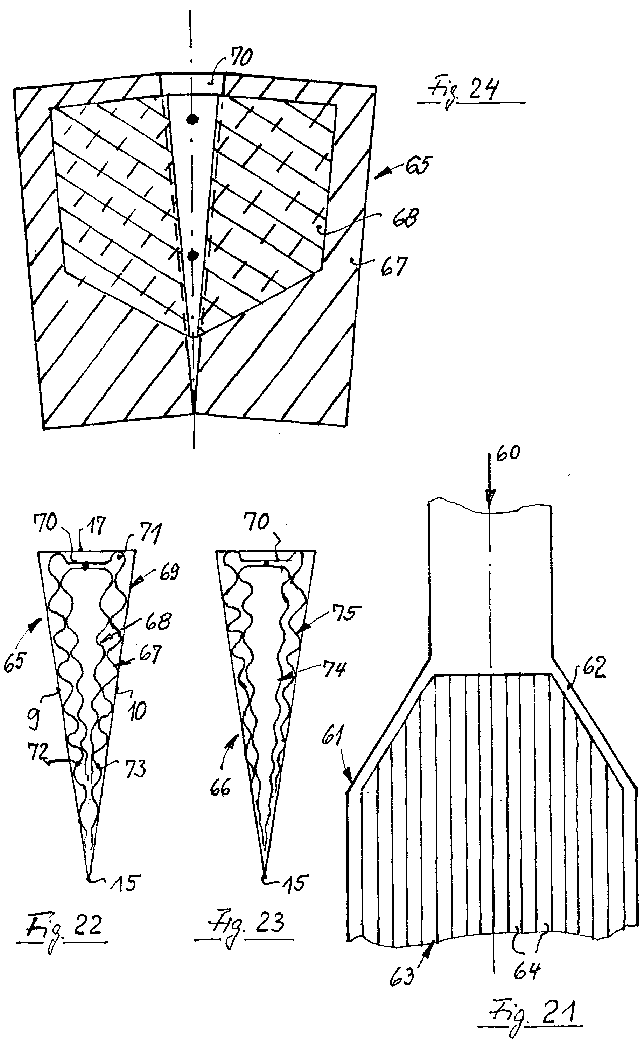

Im Ausführungsbeispiel gemäß Fig. 22 ist der Spacer 65 bei dreiecksförmiger Faltung mit einer äußeren Lage 67 versehen, die quasi eine Hülle für innere Lagen bildet, von denen eine Lage 68 dargestellt ist, wobei die Lagen 67, 68 gefaltet ineinander liegende, in Annäherung gleichschenklige Dreiecke bilden, entsprechend der Kontur der Filtertaschen 69, die lediglich im Umriss angedeutet sind und die, wie bereits geschildert, Seitenwände 9, 10 und eine den Taschenrücken bildende Deckwand 17 aufweisen. Der Deckwand 17 entspricht ein Rückenteil 70 des Spacers, in dessen Bereich die Spacerlagen 67 und 68 beispielsweise durch Verschweißung verbunden sind und in dem die Wellung der übereinander liegenden Lagen, wie in den Figuren angedeutet, zur besseren Verschweißbarkeit unterbrochen sein kann. Im Rahmen der Erfindung liegt aber auch ein durchgehender Wellungsverlauf, wobei es sich unabhängig von den jeweiligen Ausgestaltungen als zweckmäßig erweist, auch im Bereich der Deckwand 17 durch entsprechenden Abstand des Rückenteiles 70 zur Deckwand 17 eine Gasdurchtrittsfläche freizuhalten, was beispielsweise auch durch ohrenförmige Ausformungen 71 des Rückenteiles 70 im Übergang zu den Schenkeln 72, 73 der äußeren Lage 67 geschehen kann. In Fig. 22 ist die äußere Lage 67 mit ihren Schenkeln 72, 73 bis in den Bereich der durch die Eckseite 15 gebildeten Keilschneide gezogen, und die innere Lage 68 raumbedingt entsprechend verkürzt ausgebildet, während Fig. 23 eine umgekehrte Anordnung zeigt, also eine innere Lage 74, die sich bis in den Bereich der Eckseite 15 erstreckt, während die äußere Lage 75 raumbedingt verkürzt ausgebildet ist. Die Einbindung in die jeweilige Filtertasche kann für den jeweiligen Spacer auch bei der hier beschriebenen Ausführungsform dadurch erfolgen, dass er im Bereich einer oder mehrerer Eckseiten 7 bzw. 15 mit der Filtertasche verbunden wird, beispielsweise im Rahmen der Verschweißung der Seitenwände 9, 10 mit diesen als Zwischenlage verschweißt wird.

Fig. 25 bis 28 zeigen bezogen auf eine Filtertasche 76 einen mehrlagigen Aufbau eines Spacers 77, wobei in den Fig. 26 bis 28 Lagen 78, 79, 80 veranschaulicht sind, die in ihrer Querschnittsform, entsprechend dem innerhalb der keilförmigen Filtertasche 76 gegebenen Raum, abgestuft sind und die bezüglich ihrer gegen die Keilschneiden flach auslaufenden Wellenverläufe einander überkreuzen, so dass auch hier eine intensive Verwirbelung des durch die Filtertasche 76 strömenden Gases erreicht wird. Die einzelnen Lagen 78 bis 80 können, was nicht weiter dargestellt ist, untereinander beispielsweise durch Verschweißung verbunden sein und so ein Paket bilden, wobei die über einen derart aufgebauten Spacer 77 erreichte Verwirbelung der Reingase insbesondere in Verbindung mit einer katalytischen Beschichtung der Spacerlagen 78 bis 80 zweckmäßig ist und wobei für die einzelnen Lagen 78 bis 80 auch unterschiedliche Beschichtungen und die Verwendung unterschiedlicher Materialien in Frage kommt.

Fig. 29 zeigt des Weiteren in einer schematisierten Schnittführung, wie sie in Fig. 26 durch die Schnittlinie A-A lagemäßig angedeutet ist, für die einzelnen Wellenkanäle 82 einer Spacerlage in axial aufeinander folgenden Abschnitten eine gegenläufige Ausprägung der Wellenberge 83, 84, was durch eine entsprechende Schlitzung quer zum Verlauf des jeweiligen Wellenkanales 82 möglich ist, wobei verbleibende Stege 85 in Fig. 29 angedeutet sind.

Über Spacer der angesprochenen Art, die üblicherweise Stütz- und/oder Gasführungsfunktion aufweisen, lässt sich auch eine Temperaturabsorption und dadurch eine Vergleichmäßigung der Temperatur, insbesondere ein Abbau von Temperaturspitzen erreichen, was sich insbesondere in Verbindung mit katalytischen Beschichtungen zur Erzielung gleichmäßiger Arbeitstemperaturen als zweckmäßig erweist.

Im Rahmen der Erfindung können Spacer, was hier nicht gezeigt ist, auch durch entsprechend offenporige Metallschäume oder dergleichen erfindungsgemäß gebildet sein.

**Patentansprüche**

1. Abgaspartikelfilter zum Reinigen der Abgase von Brennkraftmaschinen, insbesondere von mit Dieselkraftstoff betriebenen Brennkraftmaschinen, mit aus Sintermetallblech gebildeten Filtertaschen, die vom Abgas durchströmte Filterflächen aufweisen und im Verbund einen Filterkörper bilden,
**dadurch gekennzeichnet,**
**dass** die Filtertaschen (2) spitzwinklig keilförmig ausgebildet sind und ein stumpfes, die Taschenöffnung (8) enthaltendes Keilende mit dreiecksförmigem Querschnitt sowie durch zusammenlaufende Taschenseitenwände (9, 10) gebildete Keilschneiden (Eckseiten 7, 15) aufweisen, deren eine als Querschneide (Eckseite 7) dem stumpfen Keilende gegenüberliegt und deren andere als Längsschneide (Eckseite 15) zwischen der Querschneide und dem Scheitel des stumpfen Keilendes verläuft, wobei durch die Anordnung der Filtertaschen (2) zueinander in Gegenrichtung offene, zwischen den Filtertaschen (2) liegende und deren Taschenräumen entsprechende Gegenräume bestimmt sind und die Filtertaschen (2) im Bereich wenigstens einer Kante der im Verbund aneinander anschließenden Kanten ihrer Seitenwände mit einer zur benachbart angeordneten Filtertasche (2) weisenden Verdickung zur Beabstandung von jeweils zwei Filtertaschen (2) voneinander ausgeführt sind.

2. Abgaspartikelfilter nach Anspruch 1,
**dadurch gekennzeichnet,**
**dass** den Filtertaschen (2) im Bereich wenigstens einer der verdickt ausgeführten Kanten ihrer Seitenwände jeweils ein Einsatzstück (30) zugeordnet ist.

3. Abgaspartikelfilter nach einem der Ansprüche 1 oder 2,
**dadurch gekennzeichnet,**
**dass** die Filtertaschen (2) im Bereich wenigstens einer der verdickt ausgeführten Kanten ihrer Seitenwände (9, 10) einen umgebogenen und/oder eingefalteten Seitenwandbereich (Einschlag 25, 26; 28; 31, 32) aufweisen.

4. Abgaspartikelfilter nach einem der Ansprüche 1 bis 3,
**dadurch gekennzeichnet,**
**dass** die Filtertaschen (2) keilförmig ausgebildet sind und ein stumpfes, die Taschenöffnung (8) enthaltendes Keilende mit dreiecksförmigem Querschnitt sowie durch zusammenlaufende Taschenseitenwände (9, 10) gebildete Keilschneiden (Eckseiten 7, 15) aufweisen, deren eine als Querschneide (Eckseite 7) dem stumpfen Keilende gegenüberliegt und deren andere als Längsschneide (Eckseite 15) zwischen der Querschneide und dem Scheitel des stumpfen Keilendes verläuft, wobei die Filtertaschen (2) an ihrem stumpfen Keilende ein Verhältnis von Keilhöhe (24) zur Keilrückenbreite (B) der Deckwand (17) zwischen 5 und 12 aufweisen.

5. Abgaspartikelfilter nach Anspruch 4,
**dadurch gekennzeichnet,**
**dass** das Verhältnis von Keilhöhe (24) zu Keilrückenbreite (B) etwa bei 8 liegt.

6. Abgaspartikelfilter nach einem oder mehreren der vorhergehenden Ansprüche,
**dadurch gekennzeichnet,**
**dass** die Filtertaschen (2) in einem um eine zentrale Achse zu einem Filterkörper (43) gruppierten Verbund angeordnet sind und die Filtertaschen (2) an den eine Taschenöffnung (8) bildenden Schenkeln der Seitenwände (9, 10) verdickt sind.

7. Abgaspartikelfilter nach einem oder mehreren der vorhergehenden Ansprüche,
**dadurch gekennzeichnet,**
**dass** die Filtertaschen (2) mit einem als Stütz- und/ oder Gasführungseinlage und/oder Temperaturabsorber und/oder Träger einer katalytischen Beschichtung dienenden Spacer (34) versehen sind.

8. Abgaspartikelfilter nach einem oder mehreren der vorhergehenden Ansprüche,
**dadurch gekennzeichnet,**
**dass** an spitzwinklig zulaufenden Querschneiden (Eckseite 7) der Filtertaschen (2) eine radial äußere Fixierung über einen Haltering (47) vorgesehen ist.

**Claims**

1. Exhaust-gas particulate filter for purifying the exhaust gases from internal combustion engines, in particular from internal combustion engines operated with diesel fuel, having filter pockets which are formed from sintered metal sheet, have filter surfaces through which the exhaust gas flows and in combination form a filter body, **characterized in that** the filter pockets (2) are designed in the shape of acute angled wedges and have a blunt wedge end, which includes the pocket opening (8) and is triangular in cross section, and wedge sharp edges (corner sides 7, 15), which are formed by converging pocket side walls (9, 10) and one of which, as a transverse sharp edge (corner side 7), is at the opposite side from the blunt wedge end and the other of which, as a longitudinal sharp edge (corner side 15), runs between the transverse sharp edge and the vertex of the blunt wedge end, the arrangement of the filter pockets (2) in opposite directions with respect to one another producing open opposite spaces, which are located between the filter pockets (2) and correspond to the pocket spaces of the latter, and the filter pockets (2), in the region of at least one edge of the edges of their side walls which adjoin one another when they are assembled, being designed with a thickened portion, facing towards the adjacent filter pocket (2), for spacing in each case two filter pockets (2) apart from one another.

2. Exhaust-gas particulate filter according to Claim 1, **characterized in that** the filter pockets (2), in the region of at least one of the thickened edges of their sidewalls, are each assigned an insert piece (30).

3. Exhaust-gas particulate filter according to Claim 1 or 2, **characterized in that** the filter pockets (2), in the region of at least one of the thickened edges of their side walls (9, 10), have a bent-over and/or folded-in side wall region (tuck 25, 26; 28; 31, 32).

4. Exhaust-gas particulate filter according to one of Claims 1 to 3, **characterized in that** the filter pockets (2) are designed in the shape of wedges and have a blunt wedge end, which includes the pocket opening (8) and is triangular in cross section, and wedge sharp edges (corner sides 7, 15), which are formed by converging pocket side walls (9, 10) and one of which, as a transverse sharp edge (corner side 7), is at the opposite side from the blunt wedge end and the other of which, as a longitudinal sharp edge (corner side 15), runs between the transverse sharp edge and the vertex of the blunt wedge end, the filter pockets (2), at their blunt wedge end, having a ratio of wedge height (24) to wedge spine width (B) of the covering wall (17) of between 5 and 12.

5. Exhaust-gas particulate filter according to Claim 4, **characterized in that** the ratio of wedge height (24) to wedge spine width (B) is approximately 8.

6. Exhaust-gas particulate filter according to one of more of the preceding claims, **characterized in that** the filter pockets (2) are arranged in an assembly grouped around a central axis to form a filter body (43), and the filter pockets (2) are thickened at the limbs of the side walls (9, 10) which form a pocket opening (8).

7. Exhaust-gas particulate filter according to one of more of the preceding claims, **characterized in that** the filter pockets (2) are provided with a spacer (34) which serves as a supporting and/or gas-guiding inlay and/or temperature absorber and/or support for a catalytic coating.

8. Exhaust-gas particulate filter according to one of more of the preceding claims, **characterized in**

**that** radially outer fixing via a holding ring (47) is provided at transverse sharp edges (corner side 7), which taper at an acute angle of the filter pocket (2).

## Revendications

1. Filtre à particules pour purifier les gaz d'échappement de moteurs à combustion interne, notamment de moteurs à combustion interne fonctionnant au gazole, avec des poches de filtration réalisées en tôle de métal fritté, qui présentent des surfaces filtrantes traversées par le flux de gaz d'échappement et qui forment assemblées un corps de filtre, **caractérisé en ce que** les poches de filtration (2) sont réalisées en forme de coin pointu et présentent une extrémité de coin tronquée de section triangulaire, contenant l'ouverture de poche (8), ainsi que des arêtes de coin (côtés 7, 15) formées par des parois latérales de poche convergentes (9, 10), arêtes dont l'une fait face en tant qu'arête transversale (côté 7) à l'extrémité de coin tronquée et dont l'autre s'étend, en tant qu'arête longitudinale (côté 15), entre l'arête transversale et le sommet de l'extrémité de coin tronquée, sachant que la disposition des poches de filtration (2) les unes par rapport aux autres définit des espaces complémentaires situés entre les poches de filtration (2), correspondant à leurs espaces de poches et s'ouvrant en sens contraire, et que les poches de filtration (2) sont, dans la région d'au moins un des bords de leurs parois latérales qui se raccordent les uns aux autres dans l'assemblage, réalisées avec un épaississement dirigé vers la poche de filtration (2) en position voisine et destiné à espacer chaque fois l'une de l'autre deux poches de filtration (2).

2. Filtre à particules selon la revendication 1, **caractérisé en ce qu'**une pièce d'insertion respective (30) est associée aux poches de filtration (2) dans la région d'au moins un des bords de leurs parois latérales qui sont réalisés épaissis.

3. Filtre à particules selon la revendication 1 ou 2, **caractérisé en ce que** les poches de filtration (2) présentent, dans la région d'au moins un des bords de leurs parois latérales (9, 10) qui sont réalisés épaissis, une région de paroi latérale recourbée et/ou repliée (repli 25, 26 ; 28 ; 31, 32).

4. Filtre à particules selon l'une des revendications 1 à 3, **caractérisé en ce que** les poches de filtration (2) sont réalisées en forme de coin et présentent une extrémité de coin tronquée de section triangulaire, contenant l'ouverture de poche (8), ainsi que des arêtes de coin (côtés 7, 15) formées par des parois latérales de poche convergentes (9, 10), arêtes dont l'une fait face en tant qu'arête transversale (côté 7) à l'extrémité de coin tronquée et dont l'autre s'étend, en tant qu'arête longitudinale (côté 15), entre l'arête transversale et le sommet de l'extrémité de coin tronquée, sachant que les poches de filtration (2) présentent à leur extrémité de coin tronquée un rapport de la hauteur (24) du coin à la largeur (B) du dos de coin de la paroi de recouvrement (17) qui est compris entre 5 et 12.

5. Filtre à particules selon la revendication 4, **caractérisé en ce que** le rapport entre la hauteur (24) du coin et la largeur (B) du dos de coin est environ égal à 8.

6. Filtre à particules selon une ou plusieurs des revendications précédentes, **caractérisé en ce que** les poches de filtration (2) sont disposées en un assemblage groupé autour d'un axe central en un corps de filtre (43), et les poches de filtration (2) sont épaissies sur les branches de leurs parois latérales (9, 10) qui forment une ouverture de poche (8).

7. Filtre à particules selon une ou plusieurs des revendications précédentes, **caractérisé en ce que** les poches de filtration (2) sont pourvues d'une entretoise (34) servant d'élément inséré de soutien et/ou de guidage des gaz et/ou d'absorbeur de température et/ou d'élément porteur d'un revêtement catalytique.

8. Filtre à particules selon une ou plusieurs des revendications précédentes, **caractérisé en ce qu'**une fixation radialement extérieure au moyen d'une bague de maintien (47) est prévue sur les arêtes transversales (côté 7) se terminant en pointe des poches de filtration (2).

*Fig. 1*

*Fig. 6*

_Fig. 4_

_Fig. 2_

_Fig. 3_

_Fig. 5_

Fig. 7

Fig. 8

Fig. 9

Fig. 10

Fig. 11

Fig. 12

Fig.13

Fig.19

Fig. 16

Fig. 17

Fig. 14

Fig. 20

Fig. 15

Fig. 18

Fig. 24

Fig. 22

Fig. 23

Fig. 21

20

Fig. 25

Fig. 29

Fig. 26

Fig. 27

Fig. 28